# EUROPEAN PATENT APPLICATION

(11) **EP 4 629 114 A1**
(43) Date of publication of application: **08.10.2025**
(21) Application number: 22967231.6
(22) Date of filing: 02.12.2022
(51) Int. Cl.: G06F 21/43, G06F 21/44

(54) **AUTHENTICATION SYSTEM, AUTHENTICATION METHOD, AND PROGRAM**

(71) Applicant: Hishinuma, Noboru, Fujisawa-shi, Kanagawa 251-0042 (JP); Mizutani, Akira, Chigasaki-shi, Kanagawa 253-0064 (JP)
(72) Inventor: HISHINUMA, Noboru, Fujisawa-shi, Kanagawa 251-0042 (JP)
(74) Representative: v. Bezold & Partner Patentanwälte - PartG mbB
(86) International application number: PCT/JP2022/044546
(87) International publication number: WO 2024/116401

(57) **Abstract**

The telephone number acquirer (101) acquires the telephone number of a terminal (30) attempting to be authenticated. The first FP acquirer (102) acquires the first FP for identifying the terminal (30). The SMS sender (201) sends an SMS (Short Message Service) containing a URL for connecting to the authentication device (20) to the telephone number acquired by the telephone number acquirer (101). The second FP acquirer (202) acquires the second FP for identifying the connection source to which the connection was made by the URL. The authenticator (203) authenticates the terminal (30) by verifying the consistency between the first FP and the second FP.

## Description

### Technical Field

The present disclosure relates to an authentication system, authentication method, and program.

### Background Art

It has become widespread for users to utilize services such as net banking, online shopping, and online trading via terminals like smartphones and mobile phones. To access such services, users are required to undergo authentication.

Recently, authentication methods utilizing phone numbers set on devices like smartphones and mobile phones have been adopted. For instance, Non-Patent Literature 1 describes SMS authentication, wherein a short message (hereinafter referred to as SMS (Short Message Service)) is sent to the smartphone, and the confirmation code included in the SMS is entered on the web for user authentication. Since phone contracts generally require identity verification with communication carriers, it can be presumed that users possessing phone numbers have already undergone identity verification. Consequently, authentication methods using phone numbers, like SMS authentication, are expected to be more effective in preventing fraudulent activities such as identity theft compared to password-based authentication.

### Citation List

### Non Patent Literature

Non-Patent Literature 1: "What is SMS Authentication? Mechanism and Implementation Methods for Enhancing Identity Verification," Aspic, [online, retrieved October 13, 2022], Internet, <URL: https://www.aspicjapan.orglasu/article/4367>

### Summary of Invention

### Technical Problem

The aforementioned SMS authentication has difficulty preventing fraudulent activities like authentication delegation, where a confirmation code sent via SMS to the delegate's terminal is conveyed to the user, enabling the user to pass authentication without using the phone number set on their terminal.

The present disclosure has been made in view of the above circumstances, and aims to provide an authentication system and the like that can prevent fraudulent activities in authentication utilizing phone numbers.

### Solution to Problem

To achieve the above objective, the authentication system according to the present disclosure includes:
telephone number acquisition means for acquiring a telephone number from the terminal attempting to undergo authentication;
first identification information acquisition means for acquiring first identification information to identify the terminal;
SMS sending means for sending SMS (Short Message Service) containing access information for connecting to the system to the telephone number acquired by the telephone number acquisition means;
second identification information acquisition means for acquiring second identification information to identify the connection source to which the connection was made by the access information; and
authentication means for authenticating the terminal by verifying the consistency between the first identification information and the second identification information.

### Advantageous Effects of Invention

According to the present disclosure, it is possible to prevent fraudulent activities in authentication utilizing phone numbers.

### Brief Description of Drawings

FIG. 1 is a diagram showing an example configuration of the authentication system according to Embodiments 1 and 2 of the present disclosure;
FIG. 2 is a block diagram showing an example configuration of the service providing device according to Embodiments 1 and 2 of the present disclosure;
FIG. 3 is a diagram showing an example configuration of the customer DB according to Embodiments 1 and 2 of the present disclosure;
FIG. 4 is a block diagram showing an example configuration of the authentication device according to Embodiments 1 and 2 of the present disclosure;
FIG. 5 is a diagram showing an example configuration of the authentication DB according to Embodiment 1 of the present disclosure;
FIG. 6 is a diagram showing an example configuration of the terminal DB according to Embodiment 1 of the present disclosure;
FIG. 7 is a block diagram showing an example configuration of the terminal according to Embodiments 1 and 2 of the present disclosure;
FIG. 8 is a functional block diagram showing the authentication system according to Embodiment 1 of the present disclosure;
FIG. 9 is a flowchart (Part 1) showing an example of the membership registration process according to Embodiment 1 of the present disclosure;
FIG. 10 is a flowchart (Part 2) showing an example of the membership registration process according to Embodiment 1 of the present disclosure;
FIG. 11 is a flowchart (Part 3) showing an example of the membership registration process according to Embodiment 1 of the present disclosure;
FIG. 12 is a diagram showing an example of the telephone number input screen according to Embodiment 1 of the present disclosure;
FIG. 13 is a diagram showing an example URL included in the SMS according to Embodiment 1 of the present disclosure;
FIG. 14 is a diagram showing an example SMS according to Embodiment 1 of the present disclosure;
FIG. 15 is a flowchart showing an example of the login process according to Embodiment 1 of the present disclosure;
FIG. 16 is a diagram showing an example of the login screen according to Embodiment 1 of the present disclosure;
FIG. 17 is a diagram showing an example configuration of the authentication DB according to Embodiment 2 of the present disclosure;
FIG. 18 is a diagram showing an example configuration of the terminal DB according to Embodiment 2 of the present disclosure;
FIG. 19 is a functional block diagram showing the authentication system according to Embodiment 2 of the present disclosure;
FIG. 20 is a flowchart (Part 1) showing an example of the membership registration process according to Embodiment 2 of the present disclosure;
FIG. 21 is a flowchart (Part 2) showing an example of the membership registration process according to Embodiment 2 of the present disclosure;
FIG. 22 is a flowchart (Part 3) showing an example of the membership registration process according to Embodiment 2 of the present disclosure;
FIG. 23 is a diagram showing an example of the telephone number input screen according to Embodiment 2 of the present disclosure;
FIG. 24 is a diagram showing an example of the voice input screen according to Embodiment 2 of the present disclosure;
FIG. 25 is a functional block diagram showing the authentication system according to the modified example of Embodiment 2 of the present disclosure;
FIG. 26 is a flowchart (Part 1) showing an example of the membership registration process according to the modified example of Embodiment 2 of the present disclosure;
FIG. 27 is a flowchart (Part 2) showing an example of the membership registration process according to the modified example of Embodiment 2 of the present disclosure; and
FIG. 28 is a diagram showing an example of the voice input screen according to the modified example of Embodiment 2 of the present disclosure.

### Description of Embodiments

Hereinafter, each embodiment of the present disclosure will be described in detail with reference to the drawings. Note that in the figures, identical or equivalent parts are assigned identical reference numerals.

### Embodiment 1

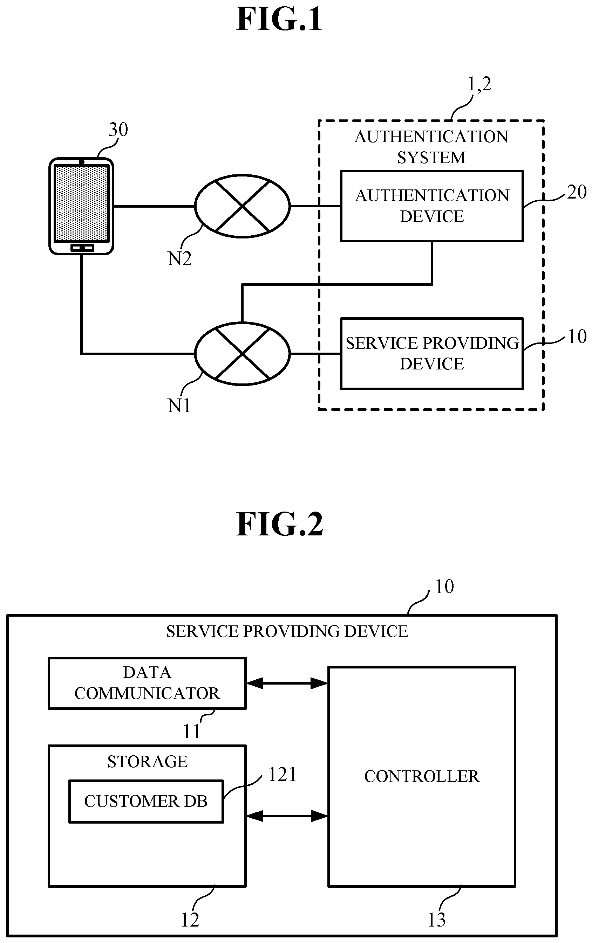

FIG. 1 is a diagram showing the overall configuration of the authentication system 1 according to Embodiment 1 of the present disclosure. The authentication system 1 includes a service providing device 10 and an authentication device 20. The service providing device 10 is connected to the terminal 30 via the Internet N1. The authentication device 20 is connected to the terminal 30 via the telephone network N2 and is also connected to both the service providing device 10 and the terminal 30 via the Internet N1.

The service providing device 10 is a web server that provides various services to users via the Internet N1. Here, "services" refer to, for example, net banking, online shopping, online trading, electronic ticketing systems, and other services that utilized via the Internet N1. To use these services, users download a dedicated application to a terminal 30 which the users use or access a dedicated website to use a service on a web browser via the user's terminal 30. When using a service for the first time, users need to execute the application downloaded to the user's terminal 30 and register (membership registration) a user ID, a password, and other information in a customer DB (Data Base) 121 described later via an application screen or a browser screen. Note that the service providing device 10 may consist of a single computer or multiple computers.

Next, the configuration of the service providing device 10 will be described. As shown in FIG. 2, the service providing device 10 includes a data communicator 11, a storage 12, and a controller 13.

The data communicator 11 performs data communication with the terminal 30 and the authentication device 20 via the Internet N1 under the control of the controller 13.

The storage 12, such as a hard disk drive, stores various types of data necessary for the operation of the service providing device 10. For example, the storage 12 stores the customer DB 121.

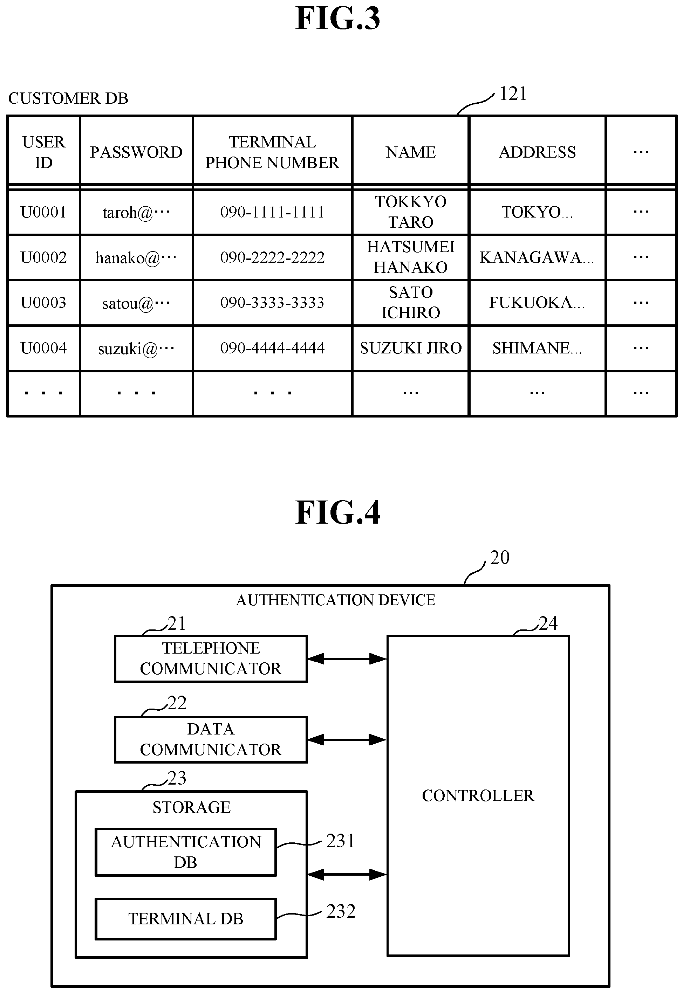

The customer DB 121 stores information about users enable to use the services provided by the service providing device 10. Specifically, as shown in FIG. 3, the customer DB 121 stores user IDs, passwords, terminal phone numbers, names, addresses, and other information for each user enable to use the services. The user ID stored in the customer DB 121 is information that uniquely identifies the user. The password stored in the customer DB 121 is a necessary password when the user logs in to the service. In order to log into the service by the user, at least the user ID and password must be registered in the customer DB 121. The terminal phone number stored in the customer DB 121 is the phone number set on the terminal 30 owned by the user. The customer DB 121 may also be stored in an external server or other storage accessible by the service providing device 10.

Returning to FIG. 2, the controller 13 includes a CPU (Central Processing Unit), ROM (Read Only Memory), RAM (Random Access Memory), and other components (not shown in figures). The CPU controls the entire service providing device 10 by executing various programs stored in the ROM or the storage 12 with using the RAM as working memory.

Returning to FIG. 1, the authentication device 20 will be described. The authentication device 20 authenticates whether the terminal 30 that accessed the service providing device 10 is legitimate. The authentication device 20 may consist of a single computer or multiple computers.

Next, the configuration of the authentication device 20 will be described. As shown in FIG. 4, the authentication device 20 includes a telephone communicator 21, a data communicator 22, a storage 23, and a controller 24.

The telephone communicator 21 performs SMS transmission/reception and telephone communication based on the SIP (Session Initiation Protocol) standards with the terminal 30 via the telephone network N2 under the control of the controller 24. The data communicator 22 communicates with the service providing device 10 via the Internet N1 under the control of the controller 24.

The storage 23, such as a hard disk drive, stores various types of data necessary for the operation of the authentication device 20. For example, the storage 23 stores the authentication DB 231 and the terminal DB 232.

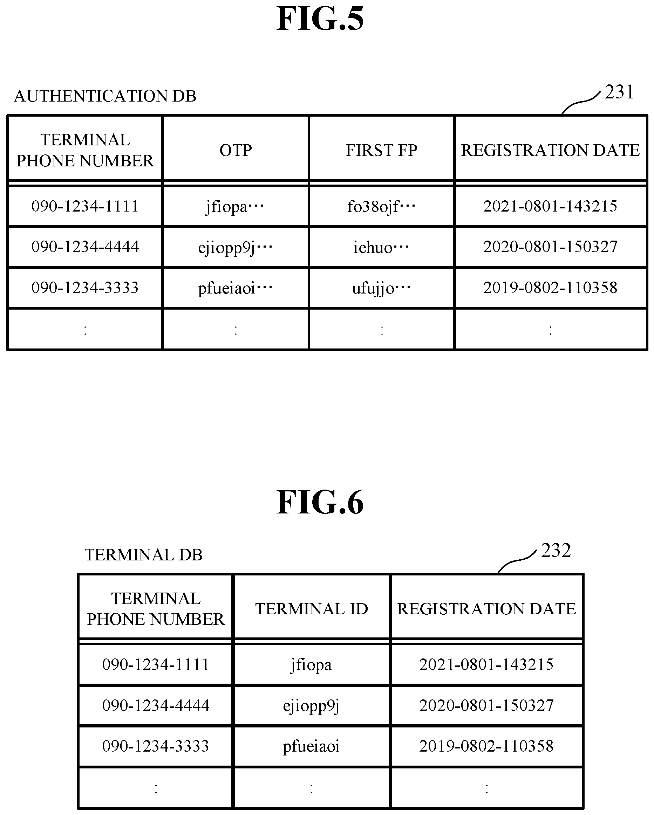

The authentication DB 231 is a data base to temporarily stores information referenced during the membership registration process described later. Specifically, as shown in FIG. 5, the terminal phone number, OTP, the first fingerprint (FP), and the registration date/time information which shows the date/time when these information are registered in the authentication DB 231 are associated with each other and stored in the authentication DB 231.

The terminal phone number stored in the authentication DB 231 is the phone number obtained from the terminal 30 that requested authentication to the service providing device 10. The terminal phone number serves as the key in the authentication DB 231, and multiple entries with the same terminal phone number are not registered in the authentication DB 231. An SMS for user authentication is sent to this terminal phone number.

The OTP stored in the authentication DB 231 is a one-time password, such as a random number, generated for each authentication. The OTP is information notified by SMS sent to the terminal phone number.

The first fingerprint (FP) stored in the authentication DB 231 is identification information for uniquely identifying the terminal 30 that requested authentication to the service providing device 10. The first FP can be obtained by hashing values of multiple attributes of the terminal 30 that are difficult to modify. For example, the "Fingerprintjs2" in library of JavaScript may be used to acquire the terminal FP.

Returning to FIG. 4, the terminal DB 232 is a database that stores information related to authenticated terminals 30 during the membership registration process described later. The terminal DB 232 is referenced when a user registered as a member by the membership registration process logs in to the application by operating the terminal 30. As shown in FIG. 6, the phone number (terminal phone number) of the terminal 30 authenticated by the membership registration process, the terminal ID of this terminal 30, and the registration date/time information which shows the date/time when these information are registered in the authentication DB 232 are associated with each other and stored in the terminal DB 232 stores. The terminal ID is authentication information generated to uniquely identify the terminal, such as information hashed by combining a random number and date/time information. The terminal DB 232 is an example of the authentication information storage means of the present disclosure.

Returning to FIG. 4, the controller 24 include a CPU, a ROM, a RAM, and other components (not shown in figures). The CPU controls the entire service providing device 20 by executing various programs stored in the ROM or the storage 23 with using the RAM as working memory.

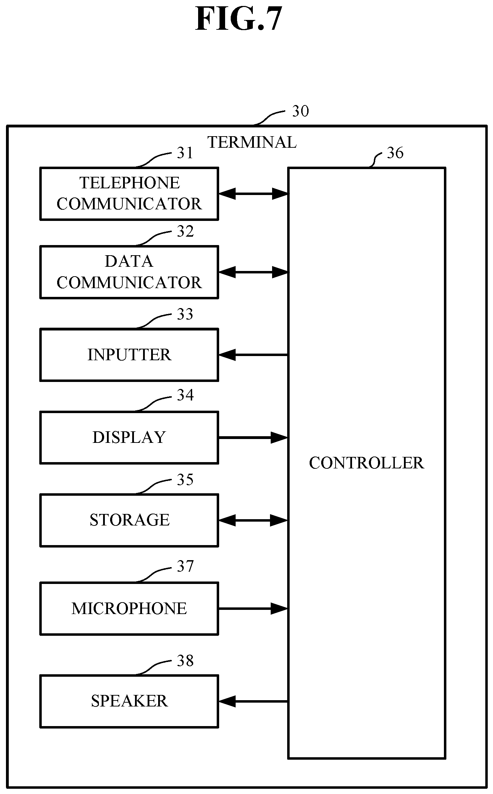

Returning to FIG. 1, the terminal 30 will be described. The terminal 30 is, for example, a smartphone used by the user. The terminal 30 is connected to telephone communication possible to the authentication device 20 via the telephone network N2. The terminal 30 is also connected to data communication possible to the service providing device 10 and the authentication device 20 via the Internet N1. As shown in FIG. 7, the terminal 30 includes a telephone communicator 31, a data communicator 32, an inputter 33, a display 34, a storage 35, a controller 36, a microphone 37, and a speaker 38.

The telephone communicator 31 performs telephone communication or SMS transmission/reception with the authentication device 20 via the telephone network N2 under the control of the controller 36. The data communicator 32 communicates with the service providing device 10 via the Internet N1 under the control of the controller 36.

The inputter 33, such as a touch panel or various buttons, is used to input various information into the terminal 30. For example, when using the service for the first time, the user operates the inputter 33 to enter the phone number of the terminal 30.

The display 34, such as an Liquid Crystal Display, outputs various types of information under the control of the controller 36. For example, the display 34 displays a phone number input screen prompting the user to enter the phone number of the terminal 30 when using the service for the first time.

The storage 35, such as a hard disk drive or flash memory, stores various data and programs necessary for the operation of the terminal 30. For instance, the storage 35 stores application program for using the services provided by the service providing device 10. Additionally, if authentication succeeds during the membership registration process described later, the terminal ID of the terminal 30 is stored in the storage 35.

The controller 36 includes a CPU, ROM, RAM, and other components (all not shown in figures). The CPU controls the entire service providing device 30 by executing various programs stored in the ROM or the storage 35 with using the RAM as working memory.

The microphone 37 captures sound emitted by the user, converts it into an electrical signal, and outputs it to the controller 36. The speaker 38 plays various sounds under the control of the controller 36.

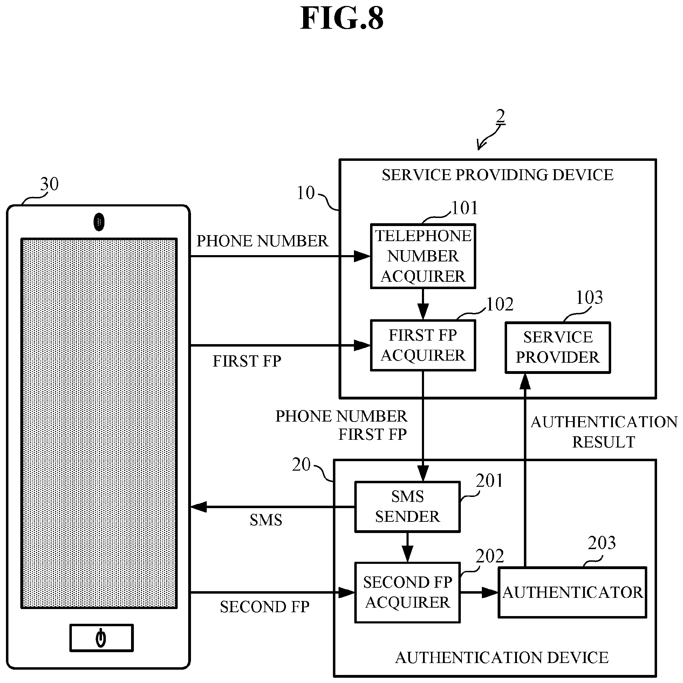

Next, the functional configuration of the authentication system 1 according to Embodiment 1 of the present disclosure will be described with reference to FIG. 8. The service providing device 10 includes, as a functional configuration, a telephone number acquirer 101, a first FP acquirer 102, and a service provider 103. These components are implemented by the cooperative operation of the data communicator 11, storage 12, and controller 13 of the service providing device 10.

The authentication device 20 includes, as a functional configuration, an SMS sender 201, a second FP acquirer 202, and an authenticator 203. These components are implemented by the cooperative operation of the telephone communicator 21, data communicator 22, storage 23, and controller 24 of the authentication device 20.

The telephone number acquirer 101 acquires the phone number (terminal phone number) of the terminal 30 from the terminal 30 of the user attempting membership registration. The telephone number acquirer 101 is an example of the telephone number acquisition means of the present disclosure.

The first FP acquirer 102 acquires the FP (hereinafter referred to as the first FP) from the terminal 30 whose phone number has been obtained. The first FP acquirer 102 also transmits the terminal phone number and the terminal FP to the authentication device 20 and requests authentication. The first FP acquirer 102 is an example of the first identification information acquisition means of the present disclosure.

The SMS sender 201 generates a one-time password (OTP) and sends an SMS to the terminal phone number to notify the OTP with the URL, which is access information to access the system (authentication device 20). The SMS sender 201 is an example of the SMS sending means of the present disclosure.

The second FP acquirer 202 obtains the FP (hereinafter referred to as the second FP) of the connection source (the terminal 30 that requested authentication if there is no fraud) to which the connection was made by the URL described in the SMS sent by the SMS transmission section 201. The second FP acquirer 202 is an example of the second identification information acquisition means of the present disclosure.

The authenticator 203 authenticates the terminal 30, for which membership registration is requested, by verifying the consistency between the first FP and the second FP. Additionally, when authenticating the terminal 30 for the second or subsequent times, the authenticator 203 confirms that the terminal ID of this terminal 30 is stored in the terminal DB 232. The authenticator 203 is an example of the authentication means of the present disclosure.

The service provider 103 executes various processes (e.g., membership registration, login) to provide services to the terminal 30 when the authenticator 203 successfully authenticates the terminal 30.

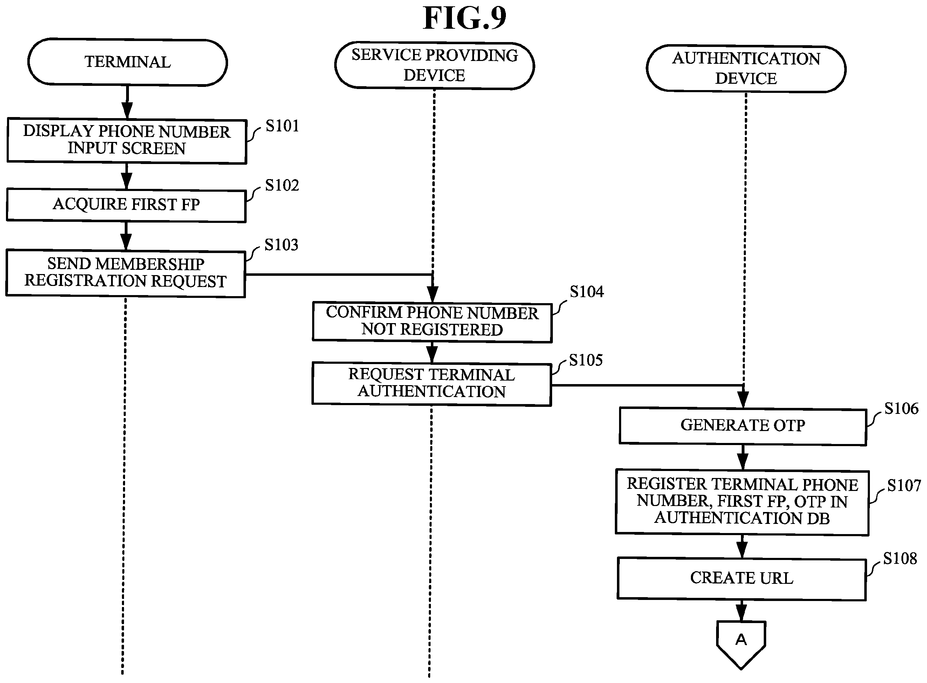

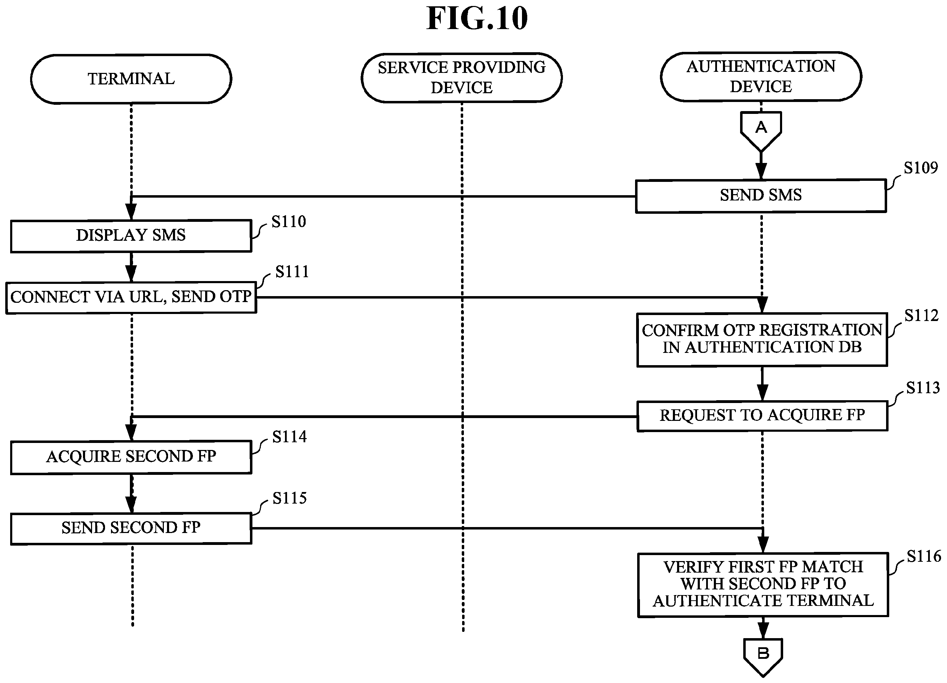

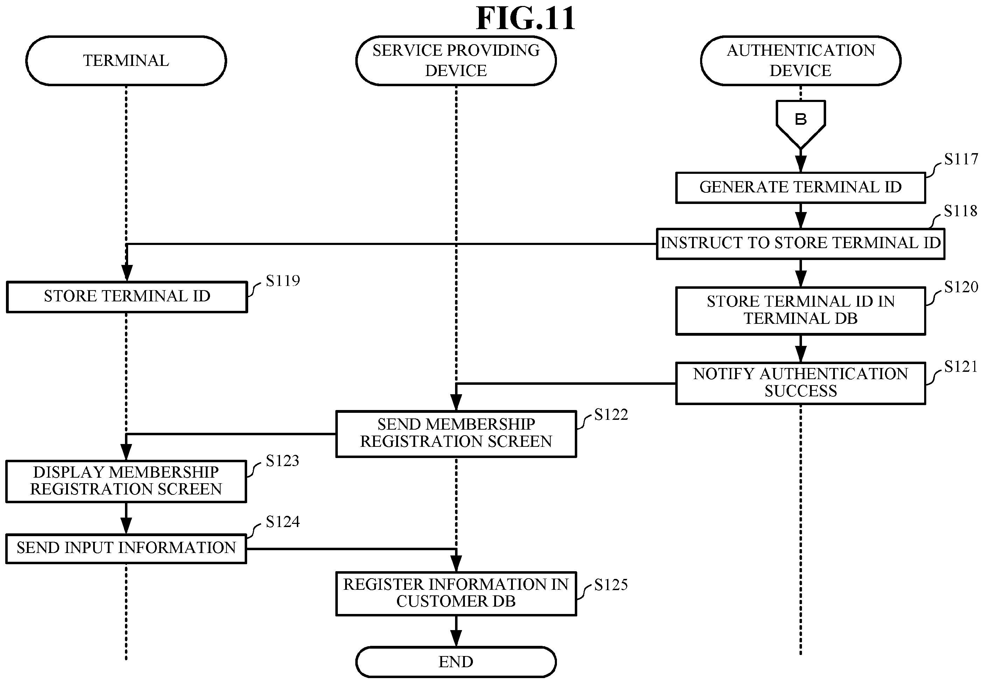

Subsequently, the operation of the membership registration process, wherein the user registers their ID, password, and other information as a member who can use the services when the user uses the services provided by the service providing device 10 for the first time in the authentication system 1, will be described with reference to the flowcharts in FIGS. 9 to 11.

The user operates the inputter 33 of their terminal 30, access a specific site and downloads the application for using the services provided by the service providing device 10. The member registration process is executed when the user operates the input section 33 of terminal 30 and starts the downloaded application for the first time.

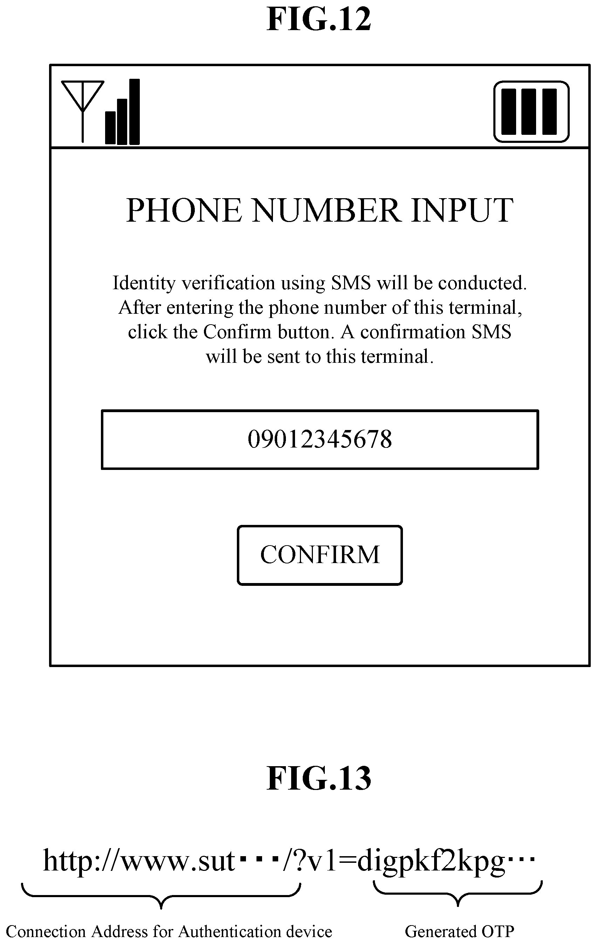

First, the controller 36 of the terminal 30 displays the phone number input screen shown in FIG. 12 on the display 34 (Step S101). The user operates the inputter 33 to enter the phone number of the terminal 30 (hereinafter referred to as "terminal phone number") in the input field of the displayed phone number input screen and clicks the confirmation button. In response to this operation, the controller 36 of the terminal 30 acquires the FP (first FP) of this terminal 30 (Step S102).

Next, the controller 36 controls the data communicator 32 and sends a membership registration request containing the acquired first FP and the terminal phone number entered on the phone number input screen to the service providing device 10 (Step S103).

Upon receiving the membership registration request, the controller 13 of the service providing device 10 confirms that an entry with the terminal phone number included in the request is not registered in the customer DB 121 (Step S104). If such an entry is registered, the process is terminated as an error due to the possibility of duplicate registration.

After said confirmation in Step S104, the controller 13 sends the terminal phone number and the first FP received from the terminal 30 to the authentication device 20 to request terminal authentication (Step S105).

Upon receiving the authentication request, the controller 24 of the authentication device 20 generates a one-time password (OTP) by, for example, generating a random number (Step S106). Then, the received terminal phone number, the terminal FP and the generated OTP are associated with each other and are registered in the authentication DB 231 by the controller 24 (Step S107).

Subsequently, the controller 24 generates a URL, which contains the generated OTP as a parameter, for accessing the authentication device 20 (Step S108). An example of the URL generated in Step S108 is shown in FIG. 13. Then, the controller 24 sends an SMS describes the generated URL to the terminal phone number (Step S109).

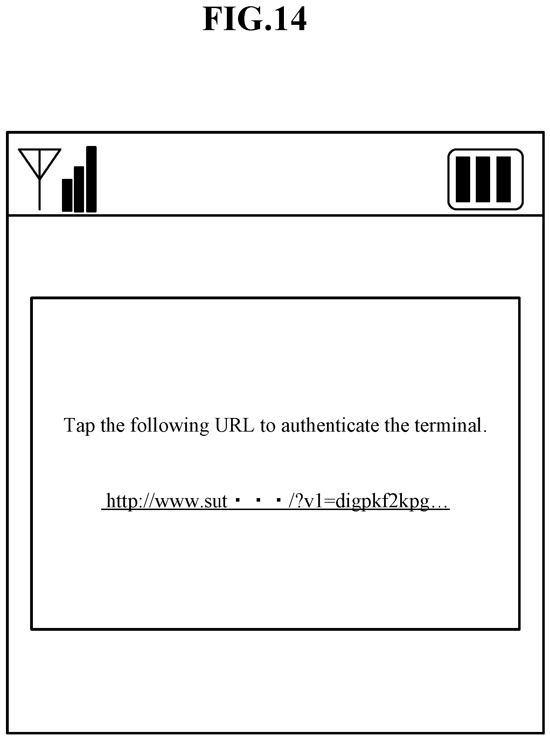

The SMS received from the authentication device 20 is displayed on the display 34 of the terminal 30 as shown in FIG. 14 (Step S110). A user clicks the URL described in the SMS via the inputter 33. In response to this, the controller 36 connects via the Internet N1 to the authentication device 20, the connection destination indicated by the clicked URL, and sends the OTP included in the URL parameters to the authentication device 20 (Step S111).

The controller 13 of the authentication device 20 confirms that an entry with the OTP received from the connected terminal 30 is registered in the authentication DB 231 (Step S112). This confirms that the connection originated from the terminal 30 to which the SMS was sent. If the OTP is not registered, the process is terminated as an authentication error.

Next, the controller 13 requests the connected terminal to acquire its FP (Step S113). The controller of the terminal that received this request acquires a FP as its identification information (the second FP) (Step S114) and sends it to the authentication device 20 (Step S115).

Upon receiving the second FP, the controller 24 of the authentication device 20 verifies that the first FP registered in the authentication DB 231 in step S107 matches the second FP received from the terminal (Step S116). This verification that the terminal 30 from which the phone number requesting authentication was obtained and the SMS recipient are the same, and the terminal 30 can be authenticated. If the match cannot be confirmed, the process is terminated as an authentication error.

Next, the controller 24 generates a terminal ID (Step S117). The terminal ID is authentication information used for authenticating this terminal 30 in subsequent attempts. For example, the controller 24 may generate information such as a combination of a random number and date/time information as the terminal ID. Alternatively, the controller 24 may generate a fingerprint (FP 1) of the terminal 30 received from the service provider device 10 as the terminal ID.

The controller 24 then executes a process to store the generated terminal ID in the connected terminal 30. Specifically, the controller 24 sends the generated terminal ID to the connected terminal 30 and instructs the connected terminal 30 to store the terminal ID (Step S118). The controller 24 performing the process in Step S118 is an example of the terminal authentication information storage means of the present disclosure. Upon receiving the instruction from the authentication device 20, the controller 36 of the terminal stores the received terminal ID in the storage 35 (Step S119). At this time, it is desirable for the controller 36 to store the terminal ID in an area of the storage 35 that is inaccessible or difficult for the user to access in the storage 35. The controller 24 of the authentication device 20 then associates the generated terminal ID with the terminal phone number and newly stores this information in the terminal DB 232 (Step S120).

The controller 24 then notifies the service providing device 10 that the terminal 30 has been authenticated (Step S121). Upon receiving this notification, the controller 13 of the service providing device 10 sends the screen data of the membership registration screen to the terminal 30 and instructs the terminal 30 to display the membership registration screen (Step S122). As a result, the membership registration screen is displayed on the display 34 of the terminal 30 (Step S123). in addition, the screen data of the membership registration screen may be pre-stored in the storage 35 of the terminal 30, and in Step S121, only an instruction to display the membership registration screen may be issued.

The user of the terminal 30 operates the inputter 33 to enter the information required for membership registration (e.g., user ID, password, name, address, etc.) from the membership registration screen and confirms the entered information. In response to this operation, the controller 36 of the terminal 30 sends the information entered on the membership registration screen to the service providing device 10 (Step S124).

The controller 13 of the service providing device 10 registers the information received from the terminal 30 in the customer DB 121 (Step S125). This completes the membership registration process. Through the membership registration process, the user is registered as a member and can subsequently log in by executing the application to access the services provided by the service providing device 10.

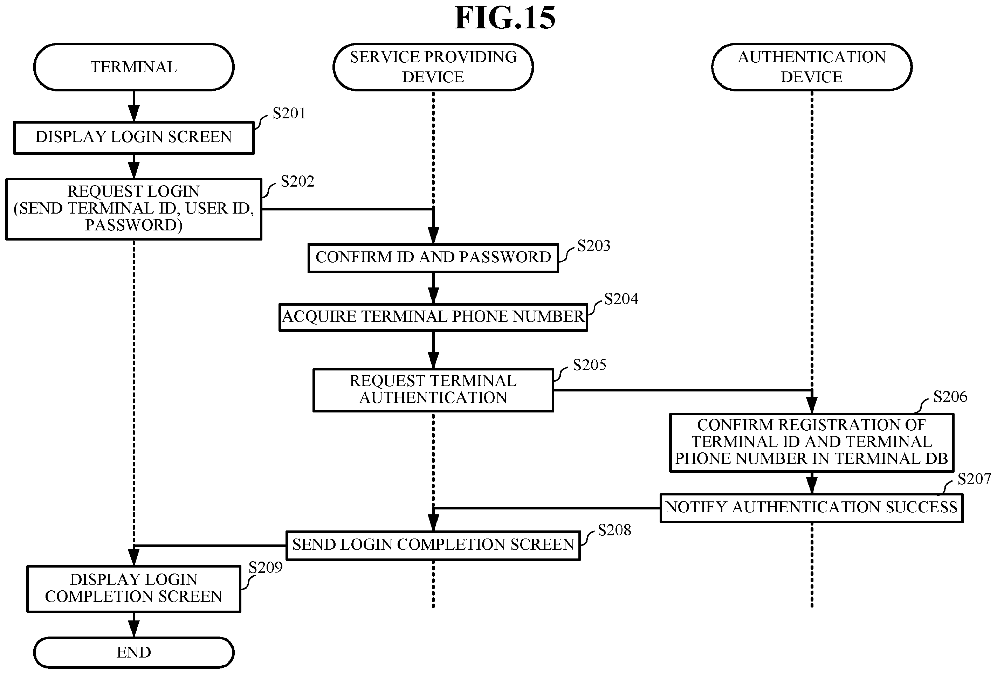

Next, the login process through which a user who has registered as a member to access the services provided by the service providing device 10 completes login from the terminal 30 will be explained with reference to the flowchart in FIG. 15.

When the user who has completed the membership registration process operates the inputter 33 of their terminal 30 to launch the application for services provided by the service providing device 10, the login process is executed.

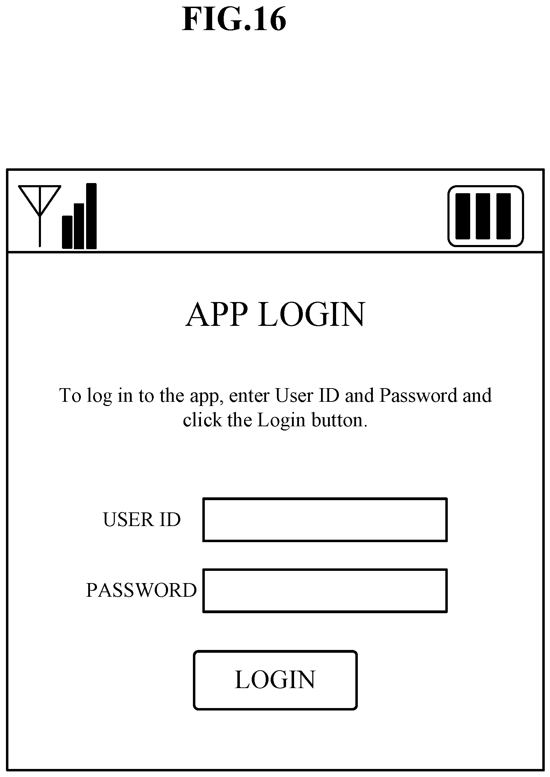

First, the controller 36 of the terminal 30 displays the login screen shown in FIG. 16 on the display 34 (Step S201). The user operates the inputter 33 to enter their ID and password registered during the membership registration process into the login screen and clicks the login button. In response to this operation, the controller 36 of the terminal 30 sends the terminal ID of the terminal 30 stored in the storage 35 along with the entered user ID and password to the service providing device 10 and requests login (Step S202).

The controller 13 of the service providing device 10 receiving the login request verify that an entry with the user ID and password pair received from the terminal is registered in the customer DB 121 (Step S203). If such a pair is not registered, it is determined that either the user ID or a password entered by the user is incorrect, and the process is terminated as an error.

If the user ID and password pair received matches an entry in the customer DB 121, the controller 13 acquires the terminal phone number included in that entry (Step S204). Then, the controller 13 sends the terminal ID obtained from the terminal 30 along with the acquired terminal phone number to the authentication device 20 and requests authentication (Step S205).

Upon receiving the authentication request, the controller 24 of the authentication device 20 confirms that the received terminal ID and terminal phone number are associated and registered in the terminal DB 232 (Step S206). If they are not registered, it is considered that the login is coming from a device other than the terminal 30 authenticated during the membership registration process, and the process is terminated as an error.

If registration in the terminal DB 232 is confirmed in Step S206, the controller 24 notifies the service providing device 10 that the authentication was successful (Step S207). Upon receiving this notification, the controller 13 of the service providing device 10 permits login for the terminal requesting login, sends the screen data of the login completion screen indicating successful login to the terminal 30 (Step S208) and displays the login completion screen on the display 34 (Step S209). This completes the login process. Subsequently, various data transmissions and receptions are performed between the terminal 30, which has been granted login permission, and the service providing device 10 in response to user operations, and the user is provided with various services.

Thus, according to this embodiment, when the phone number is obtained from the terminal 30 attempting authentication, specific information (first FP) is also obtained from the terminal 30. An SMS containing a URL for connecting to the authentication device 20 is sent to the obtained phone number, and specific information (second FP) of the terminal 30 accessing the URL is obtained. When the first FP and second FP match, the terminal 30 is authenticated. That is, in this embodiment, it can be confirmed that the terminal 30 attempting authentication and the SMS recipient are the same. This prevents fraudulent activities like authentication delegation, where a different phone number from that set on the terminal 30 is input to pass authentication.

Additionally, according to this embodiment, when the terminal is authenticated during the membership registration process, terminal ID authentication information is generated and retained both in the terminal 30 and the authentication device 20. Subsequent authentications (e.g., login authentication) are performed by verifying that the terminal ID stored in the terminal 30 matches the terminal ID stored in the authentication device 20. Therefore, for subsequent authentications of the terminal 30, the SMS sending process is unnecessary, enabling easy authentication without incurring additional effort or costs.

### Embodiment 2

In Embodiment 1 described above, SMS was used for authentication. In contrast, Embodiment 3 performs authentication by making phone calls to the terminal 30 instead of using SMS.

The authentication system 2 according to Embodiment 2 includes, as shown in FIG. 1, the service providing device 10 and the authentication device 20, similar to the authentication system 1 of Embodiment 1. The configurations of the service providing device 10 and authentication device 20 in Embodiment 2 are shown in Figures 2 and 4, and is substantially the same as the configuration of the service providing device 10 and authentication device 20 in Embodiment 1.. Similarly, the configuration of the terminal 30 in Embodiment 3 is t shown in Figure 7 and is substantially the same as the configuration of the terminal 30 in Embodiment 1.

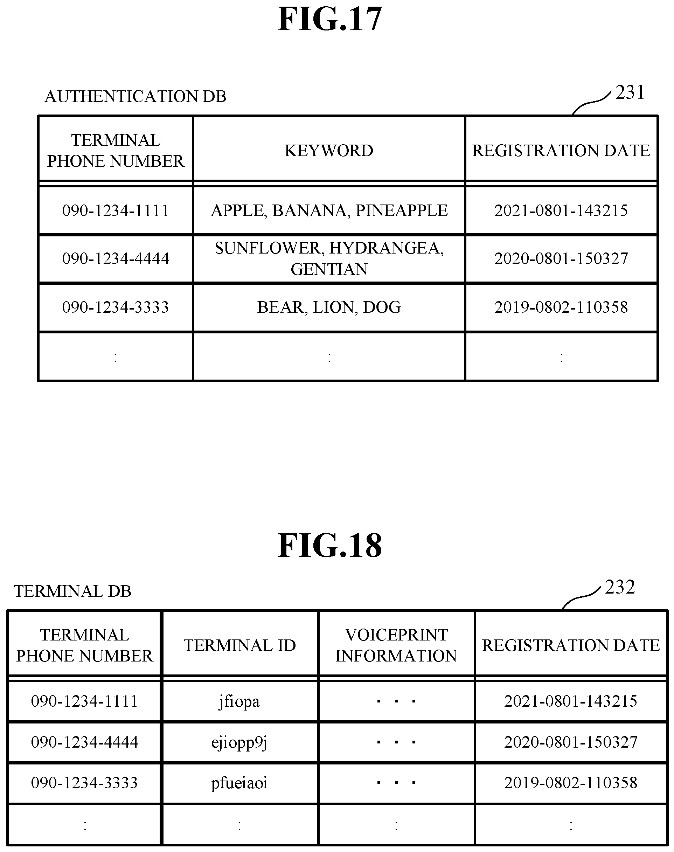

However, in Embodiment 3, the configurations of the authentication DB 231 and terminal DB 232 stored in the storage 23 of the authentication device 20 differ from those in Embodiment 1. The configuration of the authentication DB 231 in Embodiment 2 is shown in FIG. 17. In this embodiment, terminal phone numbers, keywords, and registration date/time information indicating when these pieces of information were registered in the authentication DB 231 are associated and registered in the authentication DB 231. The terminal phone numbers stored in the authentication DB 231 are phone numbers obtained from the terminal 30 requesting authentication to the service providing device 10. The keywords stored in the authentication DB 231 are keywords to be matched with voice information obtained from the phone call by making a call to the terminal phone number.

The configuration of the terminal DB 232 in Embodiment 2 is shown in FIG. 18. Compared to the terminal DB 232 in Embodiment 1, the terminal DB 232 in this embodiment further stores voiceprint information. The voiceprint information is data obtained from the voice information acquired by the voice acquirer 206 described later. The terminal DB 232 is an example of the voiceprint information storage means of the present disclosure.

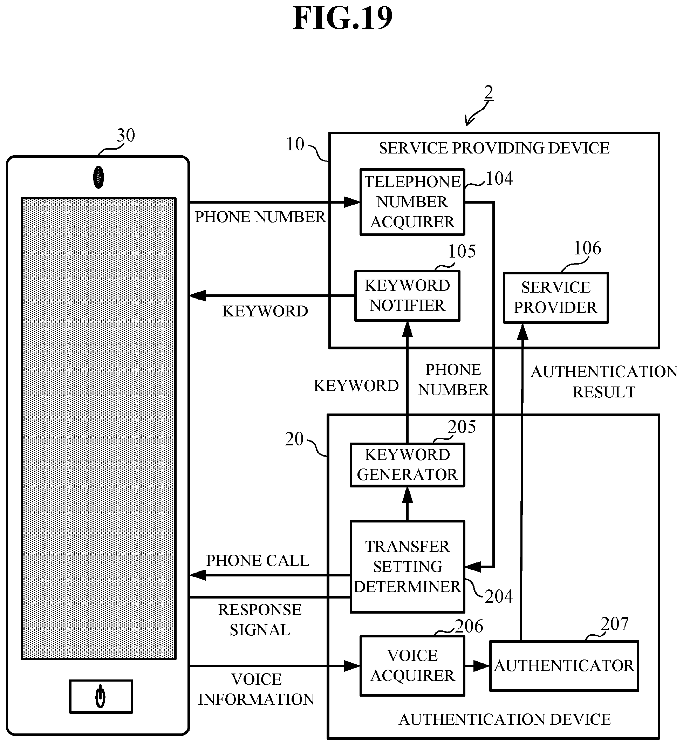

Next, the functional configuration of the authentication system 2 according to Embodiment 2 of the present disclosure will be described with reference to FIG. 19. The service providing device 10 includes, as a functional configuration, a telephone number acquirer 104, a keyword notifier 105, and a service provider 106. These components are implemented by the cooperative operation of the data communicator 11, storage 12, and controller 13 of the service providing device 10.

The authentication device 20 includes, as a functional configuration, a transfer setting determiner 204, a keyword generator 205, a voice acquirer 206, and an authenticator 207. These components are implemented by the cooperative operation of the telephone communicator 21, data communicator 22, storage 23, and controller 24 of the authentication device 20.

The telephone number acquirer 104 acquires the phone number (terminal phone number) of the terminal 30 from the terminal 30 of the user attempting membership registration.

The transfer setting determiner 204 makes a phone call to the phone number acquired by the telephone number acquirer 104 and determines whether call forwarding is set for the called phone number. Here, call forwarding setting means that when there is an incoming call, this incoming call is forwarded to a phone number of another terminal that has been registered in advance. The transfer setting determiner 204 is an example of the transfer setting determination means of the present disclosure.

The keyword generator 205 generates a keyword for voice authentication and sends the keyword to the service providing device 10 when the transfer setting determiner 204 determines that call forwarding is not set.

The keyword notifier 105 notifies the terminal 30 whose phone number was acquired by the telephone number acquirer 104 of the keyword received from the keyword generator 205 via the Internet N1. The keyword notifier 105 is an example of the keyword notification means of the present disclosure.

The voice acquirer 206 obtains voice information from the recipient of the phone call made by the transfer setting determiner 204 if the transfer setting determiner 204 determines that call forwarding is not set. The voice acquirer 206 is an example of the voice acquisition means of the present disclosure.

The authenticator 207 authenticates the terminal 30 by verifying that the voice obtained by the voice acquirer 206 matches the keyword notified by the keyword notifier 105.

The service provider 103 performs various processes (e.g., membership registration, login) to provide services to the terminal 30 when the authenticator 203 successfully authenticates the terminal 30.

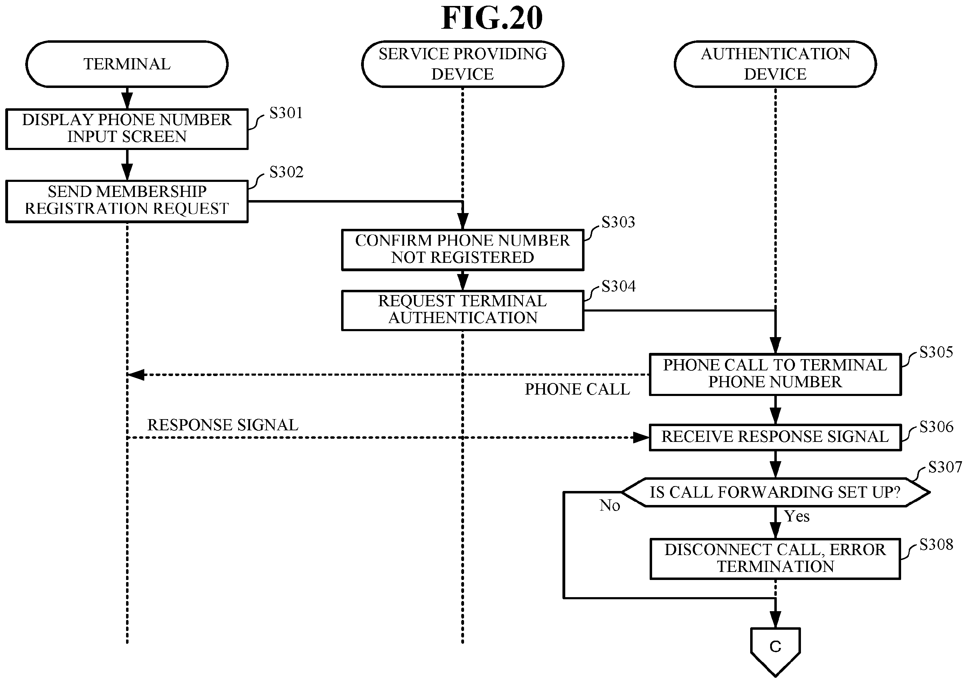

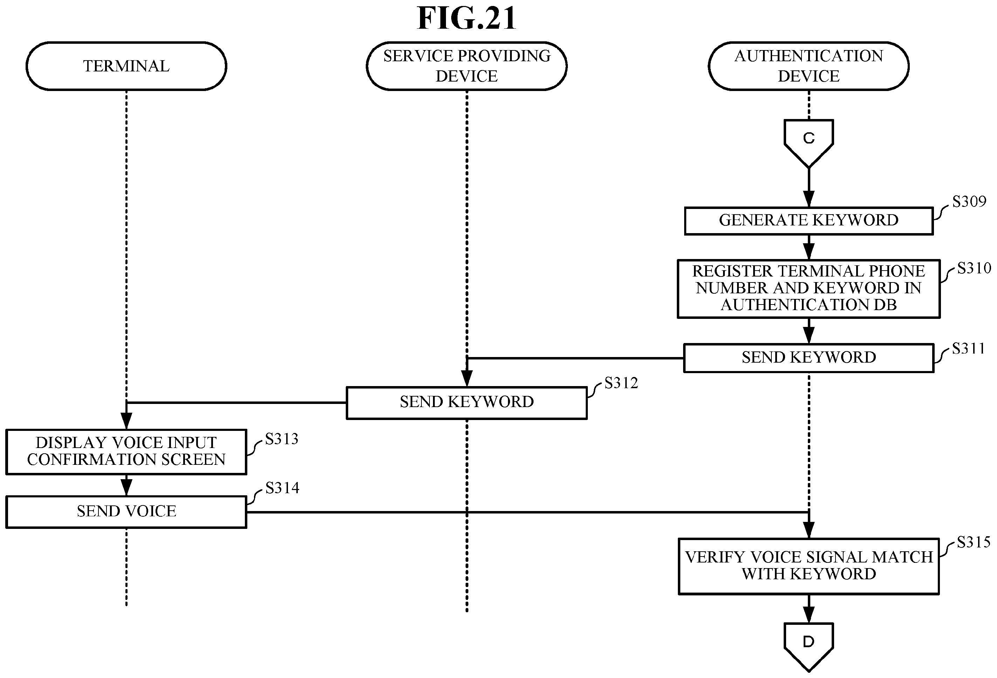

Next, the operation of the membership registration process in the authentication system 2 will be explained with reference to the flowcharts in FIGS. 20 to 22. Steps common to the membership registration process in Embodiment 1 are omitted or simplified as appropriate.

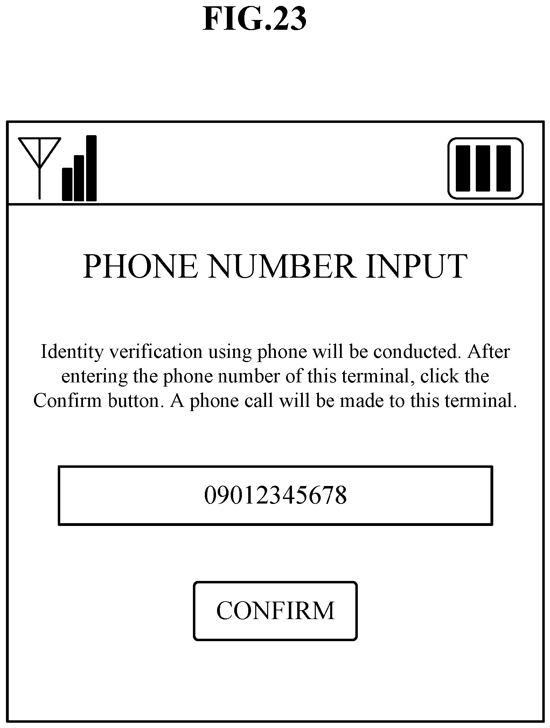

When the membership registration process begins, the controller 36 of the terminal 30 displays the phone number input screen shown in FIG. 23 on the display 34 (Step S301). When the user enters their phone number (terminal phone number) into the phone number input screen and clicks the confirm button, the controller 36 sends a membership registration request containing the terminal phone number entered in the phone number input screen to the service providing device 10 (Step S302).

Upon receiving membership registration request, the controller 13 of the service providing device 10 confirms that an entry containing the terminal phone number included in the membership registration request is not registered in the customer DB 121 (Step S303) and sends the terminal phone number received from the terminal 30 to the authentication device 20 to request authentication (Step S304).

The controller 24 of the authentication device 20, which received the authentication request, controls the telephone communicator 21 and makes a call to the terminal phone number for which authentication was requested by the service providing device 10 (Step S305). Since the telephone communicator 21 makes the call based on the SIP protocol, the authentication device 20 receives a response signal containing a status code indicating the state of the call recipient (Step S306).

Next, the controller 24 determines whether call forwarding is set for the called number based on the status code included in the received response signal (Step S307). For example, if the status code indicates "181" indicating that transfer is in progress, the controller 24 determines that call forwarding is set; otherwise, the controller 24 determines that no call forwarding is set.

If call forwarding is set for the called number (Step S307: Yes), the controller 24 disconnects the call to the terminal phone number and terminates the process as an error (Step S308).

If call forwarding is not set for the called number (Step S307: No), the controller 24 generates a keyword for voice authentication (Step S309). The keyword is date indicating any string, word, or sentence. For example, the controller 24 generates a keyword such as "apple, banana, pineapple" consisting of three words. Alternatively, multiple keywords may be stored in a storage 23 in advance, and in step S309, the controller 24 may select one of these keywords.

The controller 24 associates the received terminal phone number with the generated keyword and registers them in the authentication DB 231 (Step S310). The controller 24 then sends the generated keyword to the service providing device 10 (Step S311). The controller 13 of the service providing device 10 sends the keyword received from the authentication device to a terminal (Step S312).

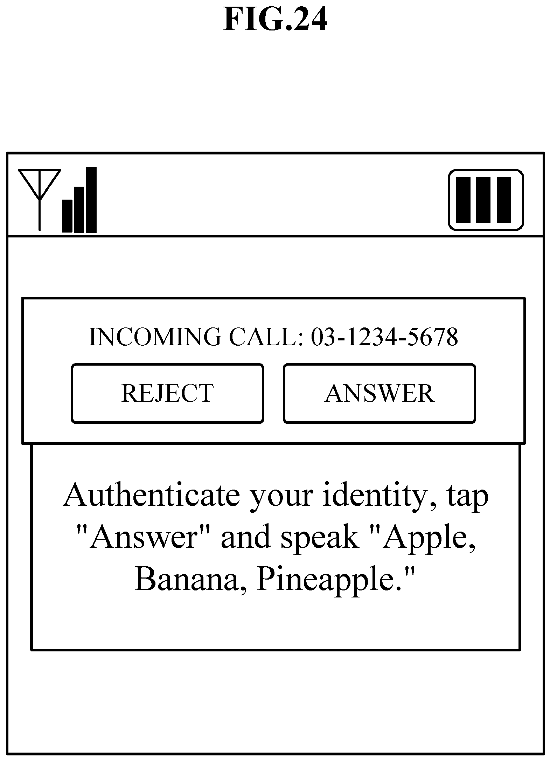

Upon receiving the keyword from the service providing device 10, the controller 36 of the terminal 30 displays a voice input screen on the display 34 to prompt voice input as shown in FIG. 24 (Step S313). The voice input screen displays a message prompting the user to voice input the received keyword, such as "apple, banana, pineapple." At the top of the voice input confirmation screen, there is an indication of the incoming call due to a telephone call made by the authentication device 20 in Step S305.

Following the message on the voice input confirmation screen, the user operates the inputter 33 to answer the telephone call. For instance, in the example in FIG. 24, the user clicks "Answer" using the inputter 33. This establishes telephone communication between the terminal 30 and the authentication device 20. The user then speaks the keyword (e.g., "apple, banana, pineapple" in FIG. 24) displayed on the voice input screen into the microphone 37 of the terminal 30, and the voice signal is transmitted to the authentication device 20 via the telephone network N2 (Step S314).

The controller 24 of the authentication device 20 that receives the voice signal verifies that the voice represented by the voice signal matches the generated keyword (Step S315). Specifically, the controller 24 converts the received voice signal into text using known voice recognition techniques and verifies that the converted text matches the keyword registered in the authentication DB 231. If the voice signal and the keyword do not match, the process is terminated as an error.

If the voice signal matches the keyword, the controller 24 of the authentication device 20 analyzes the received voice signal using known voice recognition techniques and obtains voiceprint information (Step S316). After obtaining the voiceprint information, the controller 24 may disconnect the call with the terminal 30.

Next, the controller 24 generates a terminal ID, similar to Embodiment 1 (Step S317). For example, the terminal ID may be information combining a random number and timestamp or the fingerprint of the terminal 30. If the terminal ID is a fingerprint, the controller 24 must request the fingerprint from the terminal 30. The controller 24 sends the generated terminal ID to the terminal 30 and instructs it to store the terminal ID (Step S318). The controller 36 of the terminal 30 stores the received terminal ID in the storage 35 (Step S319). The controller 24 of the authentication device 200 then associates the voiceprint information obtained in Step S316, the terminal ID created in Step S317, and the terminal phone number and newly registers them in the terminal DB 232 (Step S320).

The subsequent steps are substantially the same as the membership registration process in Embodiment 1. That is, the controller 24 of the authentication device 20 notifies the service providing device 10 that the terminal 30 has been authenticated (Step S321). In response to this notification, the controller 13 of the service providing device 10 sends the screen data of the membership registration screen to the terminal 30 and instructs it to display the membership registration screen (Step S322). As a result, the membership registration screen is displayed on the display 34 of the terminal 30 (Step S323).

The user of the terminal 30 operates the inputter 33to enter the necessary information for membership registration (e.g., user ID, password, name, address, etc.) into the membership registration screen and confirms the entered information. In response to this operation, the controller 36 of the terminal 30 sends the information entered in the membership registration screen to the service providing device 10 (Step S324).

The controller 13 of the service providing device 10 registers the information received from the terminal 30 in the customer DB 121 (Step S325). This completes the membership registration process.

The login process in this embodiment is essentially the same as the login process in Embodiment 1 and is therefore omitted.

From the above, according to this embodiment, when the phone number is obtained from the terminal 30 attempting authentication, a keyword for voice input is sent to the terminal 30, and a phone call is made to the obtained phone number to acquire voice information. The terminal 30 is authenticated by verifying that the acquired voice information matches the sent keyword. This ensures that the terminal 30 attempting authentication and the phone call recipient are the same, preventing fraudulent activities like authentication delegation, where a different phone number from that set on the terminal 30 is entered to pass authentication.

Moreover, in this embodiment, the phone number called for authentication is checked to see if call forwarding is set. If call forwarding is set, authentication fails. This prevents fraud in which a malicious actor inputs the phone number of another terminal set to forward calls to their own terminal 30 during membership registration, receives the forwarded call from the authentication device 20 on their own terminal, and obtains the phone number of the incoming call without sending their own terminal's phone number.

Furthermore, in this embodiment, when the terminal 30 is authenticated, voiceprint information obtained from the acquired voice information is associated with the terminal phone number and stored in the authentication device. Therefore, even if the user later changes the terminal model without changing the phone number, the original user can be accurately identified and authenticated during the terminal model change.

### (Variation of Embodiment 2)

In Embodiment 2 described above, the authentication device 20 made a phone call to the terminal phone number to acquire voice information from the terminal 30 for authentication. In this variation, authentication can also be performed by having the terminal 30 place a call to the authentication device 20. The following describes this variation.

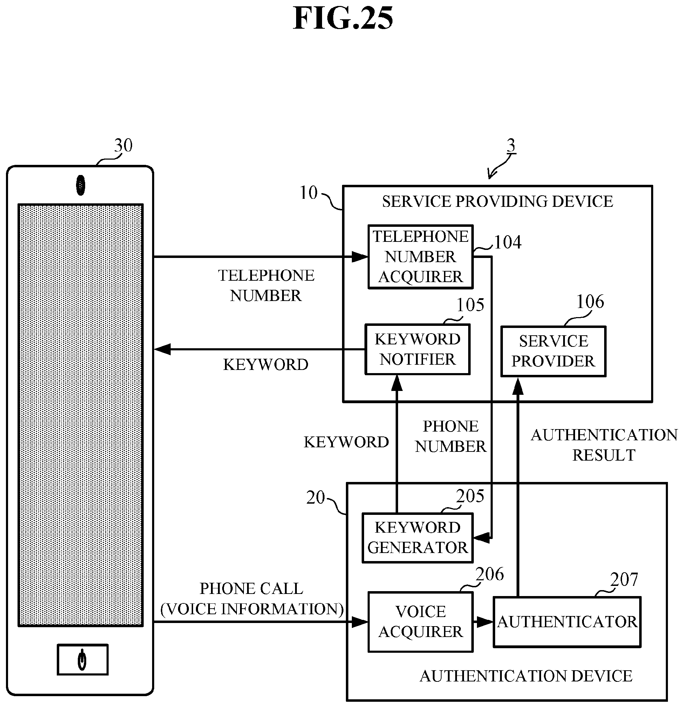

FIG. 25 shows the functional configuration of the authentication system 3 according to this variation. Unlike the authentication system 2 in Embodiment 2, the authentication device 20 in this variation does not include the transfer setting determiner 204. In addition, the voice acquirer 206 obtains voice information from the caller (terminal 30) through an incoming call from the phone number acquired by the telephone number acquirer 104. The functions of the other components are essentially the same as those in the authentication system 2 in Embodiment 2 and are therefore omitted.

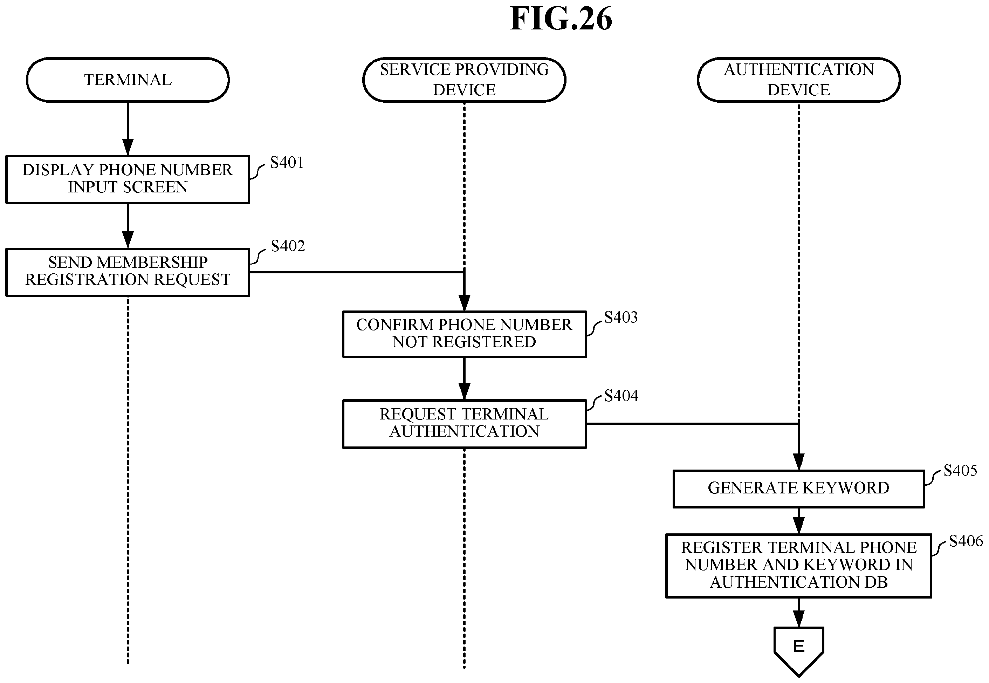

Next, the operation of the membership registration process in this variation is described with reference to the flowcharts in FIGS. 26 onward. Steps common to the membership registration process in Embodiment 2 are omitted or simplified as appropriate.

When the membership registration process begins, the controller 36 of the terminal 30 displays the phone number input screen on the display 34 (Step S401). When the user enters the phone number (terminal phone number) into the phone number input screen and clicks the confirm button, the controller 36 sends a membership registration request containing the terminal phone number entered in the phone number input screen to the service providing device 10 (Step S402).

Upon receiving the membership registration request, the controller 13 of the service providing device 10 confirms that an entry containing the terminal phone number included in the membership registration request is not registered in the customer DB 121 (Step S403) and sends the terminal phone number received from the terminal 30 to the authentication device 20 to request authentication (Step S404).

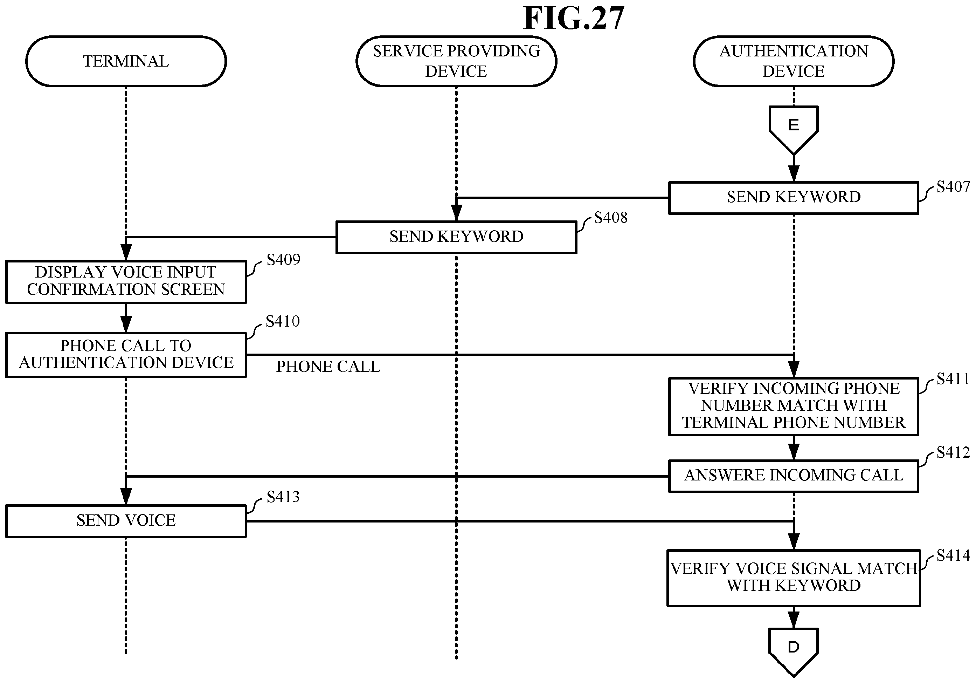

The controller 24 of the authentication device 20, which received the authentication request, generates a keyword for voice authentication (Step S405). The controller 24 associates the received terminal phone number with the generated keyword and registers them in the authentication DB 231 (Step S406). The generated keyword is then sent to the service providing device 10 (FIG. 27, Step S407). The controller 13 of the service providing device 10 sends the keyword received from the authentication device to the terminal (Step S408).

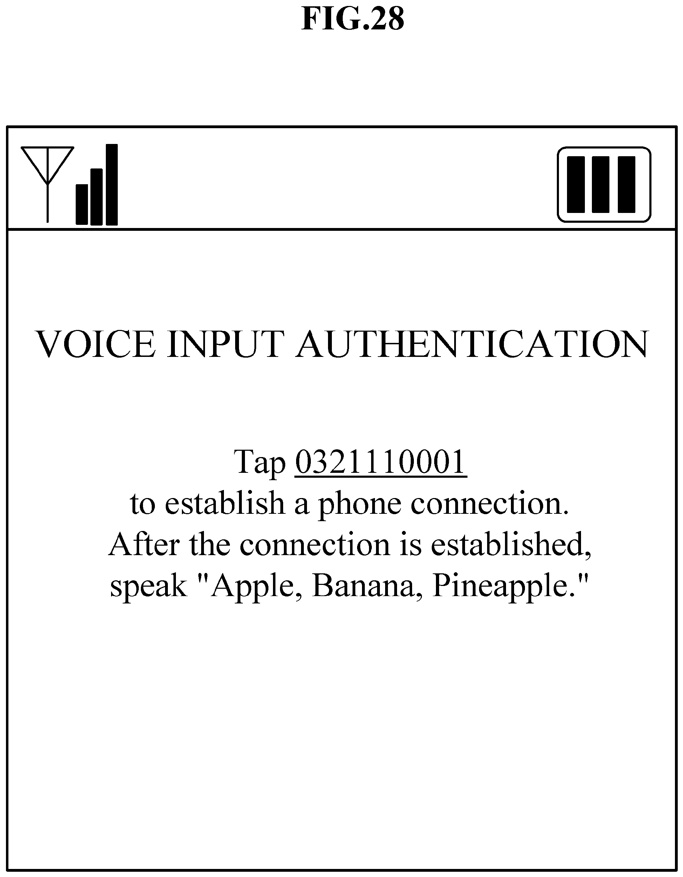

Upon receiving the keyword from the service providing device 10, the controller 36 of the terminal 30 displays a voice input screen, as shown in FIG. 28, on the display 34 to prompt the user for voice input (Step S409). The voice input screen displays the phone number "0321110001" for establishing a call connection with the authentication device 20 via tapping and a message prompting the user to voice input the received keyword, such as "apple, banana, pineapple." Alternatively, the keyword may not be displayed on the voice input screen, and the controller 24 of the authentication device 20 may notify the terminal 30 of the keyword via voice guidance after establishing the call connection to the terminal 30.

Following the message on the voice input screen, the user taps the displayed phone number via the inputter 33. In response to this operation, the controller 36 of the terminal 30 controls the telephone communicator 31 and make a call to the authentication device 20 (Step S410).

The controller 24 of the authentication device 20 verifies that the incoming phone number from the terminal 30 matches the terminal phone number obtained (Step S411). If the incoming phone number does not match the terminal phone number, the controller 24 does not answer the incoming call and terminates the process as an error.

If the verification in Step S411 is successful, the controller 24 of the authentication device 20 answers the incoming call from the terminal 30 (Step S412). This establishes telephone communication between the authentication device 20 and the terminal 30. The user speaks the keyword displayed on the voice input screen (e.g., "apple, banana, pineapple" in FIG. 28) into the microphone 37 of the terminal 30, and the resulting voice signal is transmitted to the authentication device 20 via the telephone network N2 (Step S413).

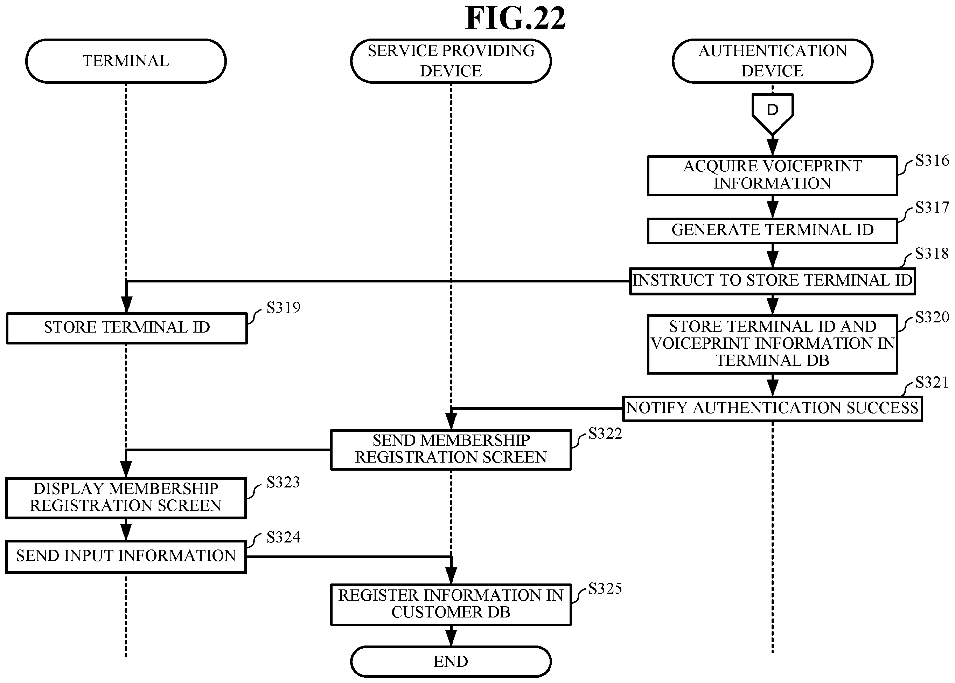

The controller 24 of the authentication device 20 verifies that the voice represented by the received voice signal matches the generated keyword (Step S414). The subsequent steps (Steps S316-S325 in FIG. 22) follow the same authentication process as Embodiment 2.

Thus, using the method of having the terminal 30 place a call to the authentication device 20, the terminal 30 can be authenticated through voice signals, just like in Embodiment 2.

### (Other Modified Examples)

The aforementioned embodiments are merely examples, and various modifications and applications are possible. For instance, while the above embodiments describe authentication during membership registration when using the service for the first time, the present disclosure is not limited to membership registration authentication; it can be applied to any situation requiring authentication of the terminal 30. For example, the invention is applicable to authentication during login from the terminal 30 to access the service. In this case, the terminal 30 sends an authentication request containing the user ID and password entered by the user to the service providing device 10. The service providing device 10, after confirming the correctness of the received ID and password by referencing the customer DB 121, acquires the user's terminal phone number from the customer DB 121 and sends it to the authentication device 20 for authentication. Subsequently, the terminal 30 may be authenticated by executing the steps from Step S106 in FIG. 9 or Step S305 onwards in FIG. 20, as described in the membership registration process.

While the above embodiments describe the service providing device 10 and the authentication device 20 as separate devices, the authentication systems 1-3 can be implemented using one or more devices integrating the functions of both devices.

Additionally, the service providing device 10 and the authentication device 20 described in the embodiments may be implemented using dedicated systems or general-purpose computer systems. For example, programs for executing the above processes may be stored on computer-readable recording media and distributed, installed on computers, and executed to form the service providing device 10, authentication device 20, or a single device integrating the functions of both devices. Alternatively, the above programs may be stored on disk devices within the service providing device 10, authentication device 20, or a single device integrating their functions over networks like the Internet, allowing computers to download them. The functionalities described above can also be realized through collaboration between the operating system (OS) and application software. In this case, the portions other than the OS can be stored on media for distribution, or stored on server devices and made available for computer download.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Reference Signs List

1, 2, 3 Authentication system
10 Service providing device
20 Authentication device
30 Terminal
N1 Internet
N2 Telephone network
11, 22, 32 Data communicator
12, 23, 35 Storage
121 Customer DB
13, 24, 36 Controller
21, 31 Telephone communicator
231 Authentication DB
232 Terminal DB
33 Inputter
34 Display
37 Microphone
38 Speaker
101, 104 Telephone number acquirer
102 First FP acquirer
103, 106 Service provider
105 Keyword notifier
201 SMS sender
202 Second FP acquirer
203, 207 Authenticator
204 Transfer setting determiner
205 Keyword generator
206 Voice acquirer

## Claims

1. An authentication system comprising:
telephone number acquisition means for acquiring a telephone number from a terminal attempting to be authenticated;
first identification information acquisition means for acquiring first identification information to identify the terminal;
SMS sending means for sending an SMS (Short Message Service) containing access information for connecting to the system to the telephone number acquired by the telephone number acquisition means;
second identification information acquisition means for acquiring second identification information to identify the connection source to which the connection was made by the access information; and
authentication means for authenticating the terminal by verifying the consistency between the first identification information and the second identification information.

2. The authentication system according to claim 1, further comprising:
terminal authentication information storage means for executing a process to store authentication information in the terminal when the authentication means successfully authenticates the terminal; and
authentication information storage means for storing the authentication information, wherein the authentication means authenticates the terminal during subsequent authentications by acquiring the authentication information from the terminal and verifying that the acquired authentication information is stored in the authentication information storage means.

3. An authentication system comprising:
telephone number acquisition means for acquiring a telephone number from a terminal attempting to be authenticated;
keyword notification means for notifying the terminal of a keyword for voice authentication;
voice acquisition means for acquiring voice information from the call recipient by placing a call to the telephone number acquired by the telephone number acquisition means, or acquiring voice information from the caller through an incoming call from the telephone number acquired by the telephone number acquisition means; and
authentication means for authenticating the terminal by verifying that the voice information acquired by the voice acquisition means matches the keyword sent by the keyword notification means.

4. The authentication system according to claim 3, further comprising:
transfer setting determination means for determining whether call forwarding is set by placing a call to the telephone number acquired by the telephone number acquisition means,
wherein the authentication means does not authenticate the terminal if the transfer setting determination means determines that call forwarding is set.

5. The authentication system according to claim 3 or 4, further comprising:
voiceprint information storage means for acquiring voiceprint information from the voice information obtained by the voice acquisition means when the authentication means successfully authenticates the terminal and storing it associated with the telephone number acquired by the telephone number acquisition means.

6. An authentication method comprising:
telephone number acquisition step for acquiring a telephone number from a terminal attempting to be authenticated;
first identification information acquisition step for acquiring first identification information to identify the terminal;
SMS sending step for sending an SMS (Short Message Service) containing access information for connecting to the system to the telephone number acquired in the telephone number acquisition step;
second identification information acquisition step for acquiring second identification information to identify the connection source to which the connection was made by the access information; and
authentication step for authenticating the terminal by verifying the consistency between the first identification information and the second identification information.

7. An authentication method comprising:
telephone number acquisition step for acquiring a telephone number from a terminal attempting to be authenticated;
keyword notification step for notifying the terminal of a keyword for voice authentication;
voice acquisition step for acquiring voice information from the call recipient by placing a call to the telephone number acquired in the telephone number acquisition step, or acquiring voice information from the caller through an incoming call from the telephone number acquired in the telephone number acquisition step; and
authentication step for authenticating the terminal by verifying that the voice information acquired in the voice acquisition step matches the keyword notified in the keyword notification step.

8. A program for causing a computer to function as:
telephone number acquisition means for acquiring a telephone number from a terminal attempting to be authenticated;
first identification information acquisition means for acquiring first identification information to identify the terminal;
SMS sending means for sending an SMS (Short Message Service) containing access information for connecting to the system to the telephone number acquired by the telephone number acquisition means;
second identification information acquisition means for acquiring second identification information to identify the connection source to which the connection was made by the access information; and
authentication means for authenticating the terminal by verifying the consistency between the first identification information and the second identification information.

9. A program for causing a computer to function as:
telephone number acquisition means for acquiring a telephone number from a terminal attempting to be authenticated;
keyword notification means for notifying the terminal of a keyword for voice authentication;
voice acquisition means for acquiring voice information from the call recipient by placing a call to the telephone number acquired by the telephone number acquisition means, or acquiring voice information from the caller through an incoming call from the telephone number acquired by the telephone number acquisition means; and
authentication means for authenticating the terminal by verifying that the voice information acquired by the voice acquisition means matches the keyword notified by the keyword notification means.
